**Europäisches Patentamt**

**European Patent Office**

**Office européen des brevets**

(19)

(11) Veröffentlichungsnummer: **0 200 045**
**B1**

(12) # EUROPÄISCHE PATENTSCHRIFT

(45) Veröffentlichungstag der Patentschrift:
**09.03.88**

(21) Anmeldenummer: **86104856.9**

(22) Anmeldetag: **09.04.86**

(51) Int. Cl.⁴: **B 62 H 1/02**

(54) **Parken eines Motorrades.**

(30) Priorität: **30.04.85 DE 3515511**

(43) Veröffentlichungstag der Anmeldung:
**05.11.86 Patentblatt 86/45**

(45) Bekanntmachung des Hinweises auf die Patenterteilung:
**09.03.88 Patentblatt 88/10**

(84) Benannte Vertragsstaaten:
**DE FR GB IT**

(56) Entgegenhaltungen:
**DE - A - 2 658 056**
**DE - A - 2 913 429**
**DE - A - 3 231 412**

(73) Patentinhaber: **BAYERISCHE MOTOREN WERKE Aktiengesellschaft, Postfach 40 02 40 Petuelring 130 - AJ-36, D-8000 München 40 (DE)**

(72) Erfinder: **Hemmer, Lothar, Gubestrasse 6a, D-8000 München 50 (DE)**
Erfinder: **Schlums, Robert, Schützenstrasse 23, D-8300 Landshut (DE)**

(74) Vertreter: **Dexheimer, Rolf, Bayerische Motoren Werke Aktiengesellschaft Postfach 40 02 40 Petuelring 130 - AJ-21, D-8000 München 40 (DE)**

## Beschreibung

Die Erfindung betrifft ein Motorrad, dessen Hinterrad an einer am Motorradgestell angelenkten Schwinge gelagert ist und über einen an der Schwinge angreifenden Stossdämpfer am Motorradgestell abgestützt ist, an welchem ein zu Parken des Motorrades absenkbarer Ständer angebracht ist. Ein solches Motorrad ist aus der DE-A-2 913 429 schon bekannt.

Der Ständer kann ein Kippständer sein, der zum Parken des Motorrades abschwenkbar ist, oder kann auch ein Ständer sein, der zum Parken des Motorrades nach unten ausgefahren wird.

Es ist bekannt, für das Parken eines Motorrades einen Kippständer vorzusehen, der am Motorradgestell um eine quer zur Fahrtrichtung verlaufende Achse schwenkbar ist. Für das Aufstellen des Motorrades auf dem Kippständer wird dieser bis in den Bodenkontakt abgeschwenkt, wonach das Motorrad um den momentanen Auflagerpunkt des Kippständers auf dem Boden nach hinten gezogen und dabei angehoben wird, wobei der Kippständer in seine endgültige, von einem Anschlag bestimmte Pakstellung gelangt. Das Aufstellen des Motorrades auf dem Kippständer erfordert daher eine sehr hohe Betätigungskraft, die um so grösser ist, je höher das Fahrzeuggewicht ist.

Durch die Erfindung wird die Aufgabe gelöst, ein Motorrad der eingangs erwähnten Art zu schaffen, bei welchem der Kraftaufwand für das Parken des Motorrades auf dem Ständer wesentlich reduziert ist.

Dies wird erfindungsgemäss dadurch erreicht, dass der Ständer in der Fahrstellung des Motorradgestells bodenberührungsfrei absenkbar ist und dass der Stossdämpfer aus seiner Fahrstellung in eine Parkstellung verstellbar ist, in welcher die Anlenkstelle der Schwinge am Motorradgestell bis zum Aufsetzen des abgesenkten Ständers auf den Boden nach unten verlagert ist.

Erfindungsgemäss wird daher der Vorgang für das Aufstellen des Motorrades auf dem Ständer in zwei Schritte aufgeteilt. Im ersten Schritt wird der Ständer bis in seine endgültige Parkstellung nach unten abgesenkt, ohne dass der Ständer dabei mit dem Boden oder der Fahrbahn in Berührung kommt, wonach der Stossdämpfer im zweiten Schritt derart verstellt wird, dass der über dem abgesenkten Ständer liegende hintere Teil des Motorradgestells bis zum Aufsetzen des Ständers auf den Boden abgesenkt wird, das Hinterrad vom anteiligen Gewicht des Motorradgestells entlastet wird und der Ständer belastet wird.

Um das Motorrad wieder in seine Fahrstellung zu bringen, wird in der umgekehrten Reihenfolge vorgegangen: zuerst wird der Stossdämpfer aus seiner Parkstellung wieder in seine Fahrstellung verstellt, wodurch der hintere Teil des Motorradrahmens mit dem Ständer vom Boden abgehoben wird, wonach der Ständer wieder in seine Fahrstellung nach oben bewegt wird. Bei Wahl geeigneter Hebelübersetzungen kann das manuelle Zurückstellen des Stossdämpfers in dessen Fahrstellung unter Anheben des hinteren Teils des Motorradrahmens mit nur geringem Kraftaufwand erreicht werden. Beispielsweise ist es auch möglich, einen Federspeicher vorzusehen, der beim Verstellen des Stossdämpfers aus der Fahrstellung in die Parkstellung gespannt wird und das Rückstellen des Stossdämpfers in dessen Fahrstellung unterstützt.

Um die Verstellbarkeit des Stossdämpfers zu erreichen, kann der Stossdämpfer insbesondere mit seiner Abstützstelle am Motorradgestell um ein vorbestimmtes Mass abschwenkbar am Motorradgestell befestigt sein, derart, dass durch das Abschwenken des Stossdämpfers an dessen Abstützstelle am Motorradgestell das erfindungsgemäss vorgeschlagene Absenken des Motorradgestells bis zum Aufsetzen des Ständers auf dem Boden zustande kommt.

Die abschwenkbare Befestigung des Stossdämpfers mit dessen Abstützstelle am Motorradgestell ist derart, dass der Stossdämpfer in seiner Fahrstellung am Motorradgestell gegen ein Abschwenken verriegelt ist, und das Abschwenken des Stossdämpfers in dessen Parkstellung erst nach Lösen der Verriegelung möglich ist, wobei die Verriegelungsvorrichtung so ausgebildet ist, dass ein selbsttätiges Entriegeln während der Fahrt verhindert ist. Zur Verriegelung kann beispielsweise ein Klinkengesperre oder ein Verriegelungsbolzen vorgesehen sein. Die Abschwenkbarkeit der Abstützstelle des Stossdämpfers am Motorradgestell kann beispielsweise mittels einer Schwenkführungsplatte erreicht werden. Wenigstens gegenwärtig wird jedoch bevorzugt, den Stossdämpfer an dem Motorradgestell über ein Kniehebelgelenk abzustützen, das zum Abschwenken des Stossdämpfers über die Totpunktlage bewegt werden muss und in der Fahrstellung des Stossdämpfers zusätzlich gesichert ist.

Das Abschwenken des Stossdämpfers mit dessen Abstützstelle am Motorradgestell und das Zurückstellen des Stossdämpfers in seine Fahrstellung können mittels einer manuellen Betätigungsvorrichtung, wie einer Schraubspindel oder einem Seil- oder Kettentrieb mit Handkurbel, erreicht werden. Es ist jedoch auch möglich, wenigstens für das Zurückstellen des Stossdämpfers in dessen Fahrstellung, ggf. jedoch auch für das Verstellen des Stossdämpfers in die Parkstellung, einen batteriegetriebenen elektrischen Antriebsmotor vorzusehen.

Wenn der Stossdämpfer eine Luftfeder enthält, besteht eine andere vorteilhafte Möglichkeit zum Verstellen des Stossdämpfers darin, die Luftfeder zum Absenken des Ständers entlüftbar auszubilden und eine Luftpumpe vorzusehen, mit welcher die Luftfeder zum Abheben des Ständers vom Boden druckbeaufschlagbar ist. Hierzu kann an dem Stossdämpfer ein Füllventil für eine manuelle Luftpumpe ausgebildet sein. Es ist jedoch auch möglich und wird für diese Ausführungsform der Erfindung bevorzugt, am Motorrad einen elektrisch betriebenen Kompressor zum Füllen der Luftfeder für das Verstellen des Stossdämpfers in dessen Fahrstellung vorzusehen.

Die Erfindung wird anhand von zwei Ausführungsformen erläutert, die schematisch aus der Zeichnung ersichtlich sind. In der Zeichnung zeigen:

Fig. 1 in schematischer Seitenansicht ein Motorrad in dessen Fahrstellung beim Absenken des Ständers für das Parken des Motorrades,

Fig. 2 das Motorrad aus Fig. 1 in der Parkstellung, in welcher der Ständer auf dem Boden aufsitzt,

Fig. 3 ein Motorrad in schematischer Seitenansicht in der Parkstellung in einer anderen Ausführungsform für die Verstellbarkeit des Stossdämpfers.

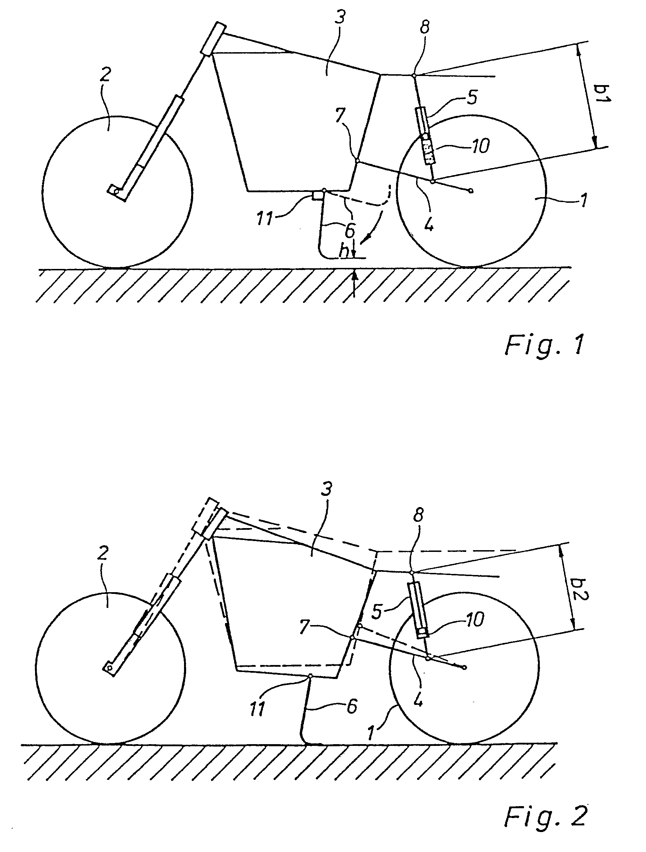

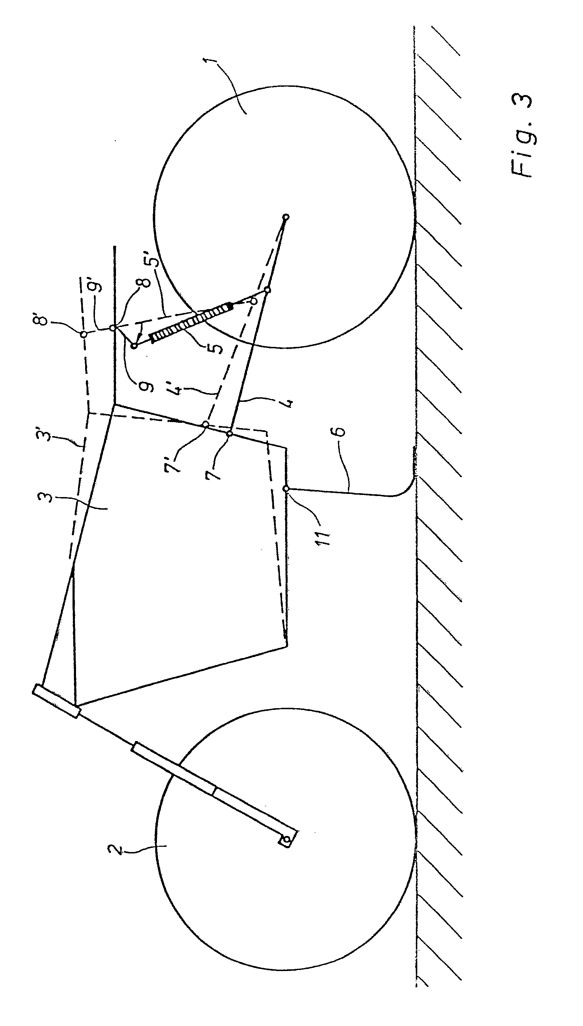

Bei dem aus der Zeichnung ersichtlichen Motorrad ist dessen Hinterrad 1 an einer am Motorradgestell 3 angelenkten Schwinge 4 gelagert, an welcher zwischen den Schwingenenden ein Stossdämpfer 5 angreift, der andererseits am hinteren Ende des Motorradgestells 3 abgestützt ist. Unten am Motorradgestell 3 ist ein in den gezeigten Ausführungsformen als Kippständer ausgebildeter Ständer 6 angelenkt, auf welchem das Motorrad für dessen Parken aufgestellt werden kann. Hierzu sind die Abmessungen des Ständers 6 derart gewählt, dass der Ständer 6 in der Fahrstellung des Motorrades, die in Fig. 1 mit ausgezogenen Linien und in den Fig. 2 und 3 mit gestrichelten Linien gezeigt ist, bodenberührungsfrei bis zu einem am Motorradgestell ausgebildeten Anschlag 11 abgeschwenkt werden kann, so dass das untere Ende des abgeschwenkten Ständers 6 in der Fahrstellung des Motorrades entsprechend Fig. 1 in einem Abstand h über dem Boden angeordnet ist. In dieser Stellung des Ständers 6, in welcher dieser bereits seine Parkstellung einnimmt, wird der hintere Teil des Motorradgestells 3 abgesenkt, bis der Ständer 6 auf dem Boden aufsitzt und das Motorrad gegen ein Umkippen halten kann.

Für das Absenken des hinteren Teils des Motorradgestells 3 wird der Stossdämpfer 5 in seiner wirksamen Länge zwischen der Schwinge 4 und der Abstützstelle 8 des Stossdämpfers am Motorradgestell 3 verkürzt. Hierzu wird bei der Ausführungsform aus den Fig. 1 und 2, bei welcher der Stossdämpfer 5 eine Luftfeder 10 aufweist, die Luftfeder 10 entlüftet, so dass der Kolben des Stossdämpfers 5 im Stossdämpferzylinder aus der Fahrstellung entsprechend Fig. 1 in die Parkstellung entsprechend Fig. 2 absinkt und sich daher die wirksame Stossdämpferlänge von dem Wert b1 in der Fahrstellung auf den Wert b2 in der Parkstellung verringert. Hierdurch werden die Anlenkstelle 7 der Schwinge 4 am Motorradgestells 3 und entsprechend der hintere Teil des Motorradgestells 3 nach unten verlagert, bis der Ständer 6 auf dem Boden aufsitzt und anstelle des Hinterrades 1 vom Fahrzeuggewicht belastet ist. Je nach der Fahrzeuggeometrie kann sich hierbei der Achsabstand der Räder 1, 2 verändern, was in der Zeichnung jedoch zur besseren Übersicht nicht dargestellt ist. Um das Motorrad wieder aus der Fahrstellung in die Parkstellung zu bringen, wird die Luftfeder 10 des Stossdämpfers 5 mittels einer in der Zeichnung nicht dargestellten Luftpumpe wieder unter Druck gesetzt, so dass der Ständer 6 wieder vom Boden abhebt und dann entsprechend der gestrichelten Darstellung in Fig. 1 wieder an das Motorradgestell 3 angeklappt werden kann.

Bei der Ausführungsform aus Fig. 3 hingegen, in welcher die Parkstellung des Motorrades mit ausgezogenen Linien und die Fahrstellung des Motorrades mit gestrichelten Linien dargestellt sind, ist zwischen der Abstützstelle 8 des Stossdämpfers 5 am Motorradgestell 3 und dem oberen Ende des Stossdämpfers 5 ein Kniehebelgelenk 9 ausgebildet, dessen Kniehebel über die Totpunktlage des Gelenks hinaus nach vorn gedrückt werden kann, wodurch der Kniehebel mit seinem oberen Ende nach unten geschwenkt wird und sich daher die am oberen Ende des Kniehebels ausgebildete Abstützstelle 8 des Stossdämpfers 5 am Motorradgestell zusammen mit dessen hinterem Teil nach unten verlagert, bis der Ständer 6 auf dem Boden aufsitzt. Die hier angesprochenen Bestandteile des Motorrades sind in Fig. 3 in der Fahrstellung des Motorrades mit entsprechenden Bezugszahlen bezeichnet, die mit einem Strich versehen sind. Zum Zurückstellen des Stossdämpfers 5 in dessen Fahrstellung wird das Kniehebelgelenk 9 wieder in die gestreckte Lage zurückgedrückt, wodurch die Abstützstelle 8 des Stossdämpfers 5 am Motorradgestell 3 wieder nach oben verlagert wird und der hintere Teil des Motorradgestells 3 für das Abheben des Ständers 6 vom Boden wieder nach oben gedrückt wird. In der Fahrstellung des Motorrades wird das Kniehebelgelenk 9 gesichert.

**Patentansprüche**

1. Motorrad, dessen Hinterrad (1) an einer am Motorradgestell angelenkten Schwinge (4) gelagert ist und über einen an der Schwinge (4) angreifenden Stossdämpfer (5) am Motorradgestell abgestützt ist, an welchem ein zum Parken des Motorrades absenkbarer Ständer (6) angebracht ist, dadurch gekennzeichnet, dass der Ständer (6) in der Fahrstellung des Motorradgestelles (3) bodenberührungsfrei absenkbar ist und dass der Stossdämpfer (5) aus seiner Fahrstellung in eine Parkstellung verstellbar ist, in welcher die Anlenkstelle (7) der Schwinge (4) am Motorradgestell (3) bis zum Aufsetzen des abgesenkten Ständers (6) auf den Boden nach unten verlagert ist.

2. Motorrad nach Anspruch 1, dadurch gekennzeichnet, dass der Stossdämpfer (5) mit seiner Abstützstelle (8) am Motorradgestell (3) um ein vorbestimmtes Mass abschwenkbar am Motorradgestell (3) befestigt ist.

3. Motorrad nach Anspruch 2, dadurch gekennzeichnet, dass der Stossdämpfer (5) an dem Motorradgestell (3) über ein Kniehebelgelenk (9) abgestützt ist.

4. Motorrad nach Anspruch 2 oder 3, dadurch gekennzeichnet, dass wenigstens zum Zurückstellen der Abstützstelle (8) des Stossdämpfers (5) am Motorradgestell (3) ein Antriebsmotor vorgesehen ist.

5. Motorrad nach Anspruch 1, bei welchem der Stossdämpfer eine Luftfeder enthält, dadurch gekennzeichnet, dass die Luftfeder (10) zum Absenken des Ständers (6) entlüftbar ist und mittels einer Luftpumpe zum Abheben des Ständers (6) vom Boden druckbeaufschlagbar ist.

6. Motorrad nach Anspruch 5, dadurch gekennzeichnet, dass die Luftpumpe ein am Motorrad angebauter Kompressor ist.

## Claims

1. A motor cycle, the rear wheel (1) of which is mounted on a rocker lever (4) articulated to the motor cycle frame and is supported on the motor cycle frame through a shock absorber (5) acting on the rocker lever (4), to which a stand (6) is fitted which can be lowered for parking the motor cycle, characterised in that the stand (6), in the driving position of the motor cycle frame (3), is lowerable without ground contact and that the shock absorber (5) is displaceable out of its driving position into a parking position in which the articulation point (7) of the rocker lever (4) on the motor cycle frame (3) is shifted downwards until the lowered stand (6) is set on the ground.

2. A motor cycle according to Claim 1, characterised in that the shock absorber (5) is secured to the motor cycle frame (3) with its point of support (8) on the motor cycle frame (3) being pivotable downwards by a predetermined amount.

3. A motor cycle according to Claim 2, characterised in that the shock absorber (5) is supported on the motor cycle frame (3) through a toggle joint (9).

4. A motor cycle according to Claim 2 or 3, characterised in that a drive motor is provided at least for the setting-back of the point of support (8) of the shock absorber (5) on the motor cycle frame (3).

5. A motor cycle according to Claim 1, in which the shock absorber contains a pneumatic spring, characterised in that the pneumatic spring (10) can be discharged of air for the lowering of the stand (6) and can be charged with pressure by means of an air pump for lifting the stand (6) from the ground.

6. A motor cycle according to Claim 5, characterised in that the air pump is a compressor built on to the motor cycle.

## Revendications

1. Motocyclette, dont la roue arrière est montée sur une bielle oscillante (4) articulée sur le cadre de la motocyclette et prend appui, par l'intermédiaire d'un amortisseur (5) venant en prise sur la bielle oscillante (4), sur le cadre de la motocyclette, sur lequel est rapporté un support (6) pouvant être abaissé pour permettre de parquer la motocyclette, motocyclette caractérisée en ce que le support (6) est susceptible d'être abaissé sans contact avec le sol dans la position de marche du cadre de la motocyclette (3), et que l'amortisseur (5) est susceptible d'être déplacé de sa position de marche dans une position de parking, dans laquelle le point d'articulation (7) de la bielle oscillante (4) sur le cadre (3) de la motocyclette est déplacé vers le bas jusqu'à ce que le support (6) ainsi abaissé repose sur le sol.

2. Motocyclette selon la revendication 1, caractérisée en ce que l'amortisseur (5) est fixé sur le cadre (3) de la motocyclette de façon à pouvoir basculer vers le bas, dans une certaine mesure, sur ce cadre (3).

3. Motocyclette selon la revendication 2, caractérisée en ce que l'amortisseur (5) prend appui sur le cadre (3) de la motocyclette par l'intermédiaire d'une articulation à genouillère (9).

4. Motocyclette selon la revendication 2 ou 3, caractérisée en ce que, au moins pour la remise en place du point d'appui (8) de l'amortisseur (5), il est prévu sur le cadre (3) de la motocyclette un moteur d'entraînement.

5. Motocyclette selon la revendication 1, caractérisée en ce que le ressort pneumatique (10) est susceptible d'être purgé d'air pour abaisser le support (6) et est susceptible d'être alimenté en pression par une pompe à air pour soulever le support (6) du sol.

6. Motocyclette selon la revendication 5, caractérisée en ce que la pompe à air est un compresseur monté sur la motocyclette.

Fig. 1

Fig. 2

Fig. 3

0 200 045